# EUROPÄISCHE PATENTANMELDUNG

(11) **EP 4 821 348 A1**
(43) Veröffentlichungstag der Anmeldung: **14.10.2026**
(21) Anmeldenummer: 25169467.5
(22) Anmeldetag: 09.04.2025
(51) Int. Cl.: A01G 31/06, A01G 9/14, G06Q 50/02

(54) **VERFAHREN UND VORRICHTUNG ZUM PLANEN UND/ODER STEUERN UND/ODER SIMULIEREN EINES BETRIEBS EINER ANLAGE ZUR AUFZUCHT VON PFLANZEN**

(71) Anmelder: Heron Innovations Factory GmbH, 6850 Dornbirn (AT)
(72) Erfinder: Beer, Christian, 6858 Schwarzach (AT)
(74) Vertreter: Riebling, Peter

(57) **Zusammenfassung**

Verfahren und Vorrichtung zum Planen und/oder Steuern und/oder Simulieren des Betriebs einer Anlage (23, 24) zur Aufzucht von Pflanzen (29), wobei die Anlage mindestens ein Regallager (17) zur Aufzucht von Pflanzen (29) in Pflanzbehältern (12) und mindestens einen schienengebundener Transportroboter (1) mit einer hebund senkbar angetriebenen Ladeplattform (10) und mindestens einem darauf angeordneten Längsförderer (15) aufweist, welcher mindestens einen Pflanzbehälter (6) in Regallagerplätze (12) des Regallagers (17) ein- oder auslagert, wobei mindestens eine Auswerteeinheit (27) Daten (21) von mindestens einer bestehenden Anlage (23) zur Aufzucht von Pflanzen (29) empfängt, verarbeitet und ein Anlagendatenmodell (25) erstellt, und Daten (22) von mindestens einem Standort mit den dazugehörigen digitalen Informationen über die Standortfaktoren empfängt, auswertet und ein Standortfaktorenmodell (26) erstellt, und dass bei Nennung eines neuen Standorts (28) die Auswerteeinheit (27) automatisch anhand der Daten (21, 22) aus dem Anlagedatenmodell (25) und dem Standortfaktorenmodell (26) eine neue Anlage (24) zur Aufzucht von Pflanzen (29) plant und zumindest eine Steuerung (30) für den Transportroboter (1) für die neue Anlage (24) bereitstellt.

## Beschreibung

Die Erfindung betrifft ein Verfahren, sowie eine Vorrichtung zum Planen und/oder Steuern und/oder Simulieren eines Betriebs einer Anlage zur Aufzucht von Pflanzen in einem Regallager.

Eine Anlage zur Aufzucht von Pflanzen wird beispielsweise bei einer vertikalen Landwirtschaft (engl. vertical farming) eingesetzt. Unter einer vertikalen Landwirtschaft wird die Kultivierung von Pflanzen in geschlossenen Räumen, auf mehreren übereinanderliegenden Etagen unter natürlichem bzw. künstlichem Licht verstanden. Bei den Pflanzen handelt es sich um Nutzpflanzen, wie beispielsweise Obst und Gemüse, welche ganzjährig angebaut und geerntet werden. Dies wird insbesondere durch eine künstliche Beleuchtung, eine Klimasteuerung und eine gesteuerte Nährstoffversorgung erreicht.

Die vertikale Landwirtschaft benötigt deutlich weniger Grundfläche, da die Pflanzen in mehrstöckigen Gebäuden (sogenannten Farmscrapers) angebaut werden, welche nahe an Ballungsgebieten der Städte sind. Dadurch werden lange Transportwege von den Anbaugebieten zu den Verbrauchern vermieden. Weitere Vorteile sind die Steigerung der Nutzpflanzenproduktion, der Schutz vor Witterungseinflüssen, ein ressourcenschonender Anbau, die Wassereinsparung durch geschlossene Wasserkreisläufe, sowie die Nutzung von erneuerbaren Energien. Auf den Einsatz von Pestiziden und Fungiziden kann aufgrund der fehlenden Umwelteinflüsse ebenfalls verzichtet werden.

Ein weiterer, wichtiger Faktor bei der vertikalen Landwirtschaft spielt die Automatisierung, denn die automatisierten Produktionsstätten können nicht nur den Mangel an Feldarbeitskräften ausgleichen, sondern es kann auch 24 Stunden, 7 Tage kostengünstig und ressourcenschonend auf einer geringen Grundfläche frisches Obst und Gemüse angebaut und geerntet werden. Zusätzlich bringen Mitarbeiter Verunreinigungen in das System.

Im Rahmen der vertikalen Landwirtschaft wird beispielsweise ein schienengebundener Transportroboter mit Hubplattform eingesetzt, wie er mit der DE 10 2017 121 638 A1 offenbart wird. Des Weiteren kann auch ein Transportroboter gemäß der DE 10 2018 109 495 A1 eingesetzt werden. Auf beide Druckschriften wird vollumfänglich Bezug genommen.

Der Transportroboter fährt auf einer Schienenbahn, welche aus zwei beabstandeten Schienensträngen besteht, die im deckenseitigen Bereich jeder Regalgasse angeordnet sind. Der schienengebundene Transportroboter ist zweiteilig ausgebildet, wobei der erste Teil des Transportroboters das Fahrwerk für das horizontale Fahren auf Schienen bildet und der zweite Teil eine Hub-Plattform mit integriertem Lastenaufnahmemittel aufweist. Durch die Anordnung des Transportroboters im deckennahen Bereich kann die darunterliegende Lagerfläche anderweitig genutzt werden. Die Ein- und Auslagerung der Pflanzbehälter erfolgt mit einem Lastaufnahmemittel, welches beispielsweise als mindestens ein Längsförderer mit zwei ausfahrbaren Teleskop-Schlitten ausgebildet ist, die den Behälter unterfahren und mittels Zahnriemen präzise auf den Transportroboter laden. Je nach der Auszugslänge der Hubbänder können dabei mehrere fluchtend untereinander angeordnete Abstellplätze in einem Regallager bedient werden, ohne dass der Transportroboter seine Stellung auf der Schienenbahn verändert. Vorzugsweise können die Teleskop-Schlitten zu beiden Seiten der Hubplattform ausgefahren kann werden. Dadurch ist es möglich einen Pflanzbehälter aus dem Regallagerplatz einer ersten Regalreihe zu entnehmen und in einen Regallagerplatz der gegenüberliegenden zweiten Regalreihe abzusetzen. Dadurch wird ein schneller Umsatz der Pflanzbehälter erreicht.

Neben dem deckenseitig angeordneten Transportroboter kann auch ein Regalbediengerät (RBG) mit einer Hubplattform (Hubschlitten) und einem Lastenaufnahmemittel eingesetzt werden. Das Regalbediengerät weist einen Mast und ein einspuriges Fahrwerk auf und wird gegenüber dem Regal mit jeweils einer Schiene im oberen Bereich und einer Schiene im unteren Bereich geführt. Wesentlicher Vorteil des Regalbediengeräts ist das diagonale Verfahren der Hubplattform und damit der schnelle Zugriff auf die einzelnen Regallagerplätze.

Im Folgenden wird unter einem Transportroboter sowohl der deckenseitig geführte Transportroboter, als auch das Regalbediengerät verstanden.

Ein Pflanzbehälter mit einem Pflanzenträger zur Aufzucht von Pflanzen und ein Verfahren zur Aufzucht von Pflanzen wird beispielsweise mit der EP 4 062 749 A1 oder der EP 4 252 528 A1 offenbart, auf welchen vollumfänglichen Bezug genommen wird.

Die Aufzucht der Pflanzen erfolgt in Pflanzbehältern, welche von den Transportrobotern innerhalb eines Regallagers bewegt werden. Das Regallager ist beispielsweise ein Fachbodenregallager oder ein Hochregallager, wobei sich die Pflanzbehälter in vertikal übereinander angeordneten Regallagerplätzen befinden.

Während der Keimphase benötigen die Samen bzw. Pflanzen besondere Voraussetzungen, wie beispielweise besondere klimatische Bedingungen, Lufttemperatur, Feuchtigkeit und/oder besondere Lichtverhältnisse. Diese Daten müssen während der Aufzucht der Pflanzen permanent überwacht und die jeweiligen Quellen (Licht, Klima, etc.) dementsprechend regelt werden.

Die CN 116941445A offenbart ein automatisiertes System und Verfahren zur Verwaltung einer Aufzuchtanlage. Mit der Anlage soll eine volle Ausnutzung der Förderanlage, insbesondere ein vollautomatischer Produktionsprozess erreicht werden, um eine standardisierte Produktion von Nutzpflanzen ohne menschliche Eingriffe zu erreichen. Die Aufzuchtanlage befindet sich in einem Gewächshaus, wobei eine zentrale Steuereinheit bestimmte Daten von Temperatur- und Luftfeuchtigkeitssensoren, Lichtsensoren, Gassensoren, Antriebsmechanismen, Bewässerungsvorrichtungen und Förder- und Hebevorrichtungen erhält.

Die DE 10 2019 207 650 A1 offenbart ein System, bei welchem ein Ladungsträger mindestens einen Sensor zur Erfassung mindestens eines Betriebsparameters aufweist, wobei die gewonnen Daten von einer Auswerteeinrichtung ausgewertet und das Ergebnis für die Berechnung, Vorhersage und/oder Planung des Betriebsverhaltens oder des Betriebszustands des Ladungsträgers genutzt werden.

Aus dem Stand der Technik sind somit bereits Systeme für die Überwachung der Pflanzen, Umgebungsbedingungen und der Betriebsparameter des Transportroboters (Ladungsträgers) bekannt, wobei die gewonnen Daten ausgewertet und hinsichtlich einer Diagnose, Steuerung und/oder Optimierung der Anlage genutzt werden.

Jede neue Anlage zur Aufzucht von Pflanzen ist standortabhängig und muss individuell neu geplant werden. Eine Vorab-Analyse zur wirtschaftlichen Durchführbarkeit von einer solchen Anlage zur Aufzucht von Pflanzen im Rahmen einer vertikalen Landwirtschaft wurde bisher nicht gemacht. Bisher wurden die Daten und Parameter aus den bestehenden Anlagen nicht für den Neubau berücksichtigt. In der Vergangenheit wurden beispielsweise Anlagen zur Aufzucht von Pflanzen an Standorten aufgebaut, welche aufgrund der Betriebskosten, Größe des Bauplatzes, Lichtverhältnisse, Niederschlagsmengen und dergleichen nur bedingt für eine solche Anlage geeignet waren. Es wäre daher vorab interessant zu wissen, ob sich ein bestimmter geografischer Ort für den Neubau einer solchen Anlage eignet.

Aufgabe der vorliegenden Erfindung ist es daher ein Verfahren und eine Vorrichtung bereitzustellen, welche für die Optimierung von bestehenden Anlagen und die Planung von neuen Anlagen zur Aufzucht von Pflanzen eingesetzt wird.

Wesentliches Merkmal ist, dass die Vorrichtung eine Auswerteeinheit aufweist, welche eine Optimierung einer bestehenden Anlage zur Aufzucht von Pflanzen und/oder eine Berechnung/Simulation/Planung einer neuen Anlage zur Aufzucht von Pflanzen durchführt.

Bei einer ersten bevorzugten Ausführungsform plant die erfindungsgemäße Vorrichtung den Neubau einer Anlage zur Aufzucht von Pflanzen an einem vorher festgelegten (neuen) Standort.

Hierfür wird das folgende Verfahren umgesetzt:
Verfahren zum Planen und/oder Steuern und/oder Simulieren des Betriebs einer Anlage zur Aufzucht von Pflanzen, wobei die Anlage mindestens ein Regallager zur Aufzucht von Pflanzen in Pflanzbehältern und mindestens einen schienengebundener Transportroboter mit einer heb- und senkbar angetriebenen Ladeplattform und mindestens einem darauf angeordneten Längsförderer aufweist, welcher mindestens einen Pflanzbehälter in Regallagerplätze des Regallagers ein- oder auslagert, wobei mindestens eine Auswerteeinheit
- Daten von mindestens einer bestehenden Anlage zur Aufzucht von Pflanzen empfängt, verarbeitet und ein Anlagendatenmodell erstellt,
- Daten von mindestens einem Standort mit den dazugehörigen digitalen Informationen über die Standortfaktoren empfängt, auswertet und ein Standortfaktorenmodell erstellt,
und dass bei Nennung eines neuen Standorts die Auswerteeinheit automatisch anhand der Daten aus dem Anlagedatenmodell und dem Standortfaktorenmodell eine neue Anlage zur Aufzucht von Pflanzen plant.

Es ist ferner möglich, dass die Auswerteeinheit anhand der Daten einen digitalen Zwilling erstellt, wobei es sich bei einem digitalen Zwilling um eine digitale Repräsentanz eines materiellen oder immateriellen Objekts aus der realen Welt in der digitalen Welt handelt.

Zusätzlich kann die Auswerteeinheit eine Steuerung für der gesamten Anlage bereitstellen. Die Steuerung (Steuerungsvorrichtung) kann hierfür folgende Tools umfassen bzw. aufweisen:
- Steuerungstool zur Steuerung der Fördertechnik. Dies kann beispielsweise die Steuerung des Transportroboters oder eine andere Regallagertechnik sein;
- Klimatool zur Steuerung der klimatischen Bedingungen innerhalb der Anlage. Dies kann beispielsweise die Steuerung der Klimaanlage, der Befeuchtungsanlage, der Lüftungsanlage usw. sein;
- Nährstofftool zur Steuerung der Nährstoffversorgung der Pflanzen. Hierbei handelt es sich um eine Dosiervorrichtung, welche gezielt Nährstoffe bzw. eine Nährstofflösung an den jeweiligen Pflanzbehälter abgibt;
- Lichttool zur Steuerung der Beleuchtung. Bei einiger Regallagerplätze muss beispielsweise die Lichtleistung erhöht werden, um das Wachstum der Pflanzen zu beschleunigen. Bei einigen Regallagerplätzen bleibt das Licht aus, da hier der Nachtmodus simuliert wird;
- Bewässerungstool zur Steuerung der Bewässerung jedes einzelnen Pflanzbehälters.

Unter dem Begriff "neuer Standort" wird ein Standort verstanden, an welchem bisher noch keine Anlage zur Aufzucht von Pflanzen vorhanden ist. Bei der vorliegenden Ausführungsform findet somit eine Planung einer neuen Anlage zur Aufzucht von Pflanzen statt. Hierbei greift die Auswerteeinheit auf Daten und/oder digitale Informationen von bestehenden Anlagen zurück, welche ausgewertet in dem Anlagendatenmodell hinterlegt sind.

Zusätzlich können Daten von so genannten externen Quellen berücksichtigt werden. Hierbei handelt es sich beispielsweise um Literatur, Erfahrungen, Know-How oder Herstellerangaben, welche von der Auswerteinheit bei der neuen Anlage berücksichtig werden.

Beispielsweise wird der Auswerteeinheit ein neuer Standort für eine mögliche Anlage zur Aufzucht von Pflanzen in Form eines Bauplatzes (z.B. 12.000m²) oder in Form von bestimmten Koordinaten genannt. Auf Basis dieser Daten und den Informationen aus dem Anlagendatenmodell, sowie den Informationen aus dem Standortfaktorenmodell plant die Auswerteeinheit nun eine neue Anlage. Die Planung der neuen Anlage kann beispielsweise das Gebäude (Farmscraper), in welchem sich die Anlage zur Aufzucht von Pflanzen befindet und/oder die (eigentliche) Anlage zur Aufzucht der Pflanzen, umfassen. Ferner kann die Auswerteeinheit Informationen bereitstellen bzgl. der Regale, Regallagerplätze, Anzahl an Pflanzbehälter, Anzahl an Pflanzen, Transportroboter, Anzahl der Mitarbeiter, Energieverbrauch, An- und Ablieferung und/oder Entsorgung.

Da bei der neuen Anlage ebenfalls mindestens ein Transportroboter die Pflanzbehälter in Regallagerplätze des Regallagers ein- oder auslagert, greift die Auswerteeinheit auf das "Wissen" der bestehenden Anlagen zurück und erstellt eine Steuerung für die Transportroboter der neuen Anlage zur Aufzucht von Pflanzen.

Bei der vorliegenden Ausführungsform wird beispielsweise der Auswerteeinheit ein konkreter Standort mit einer Adresse und einer Größe genannt. Zusätzlich kann der Auswerteeinheit erste Daten bzgl. der Anlage zur Aufzucht der Pflanzen genannt werden. Beispielsweise möchte man an dem Standort circa 20.000 Gemüsepflanzen anbauen. Auf Basis dieser Parameter identifiziert die Auswerteeinheit die relevanten Informationen aus dem Anlagendatenmodell und dem Standortfaktorenmodell und erstellt einen ersten Entwurf für eine neue Anlage zur Aufzucht von Pflanzen. Der neue Entwurf kann beispielsweise ein Gebäude mit Abmessung (x*x*x) und einem Regallager mit x Regellagerplätzen und x Transportroboter umfassen. Zusätzlich liefert der Entwurf bereits erste Informationen was für die neue Anlage benötigt wird. Dies kann beispielsweise die benötige Energie, Baumaterialien (Gebäude, Regallager), Anzahl an Pflanzbehältern, Lichtleistungen, Klimatisierung, Nährstoffmenge usw. sein.

Der Anwender erhält somit durch die Eingabe eines Ortes und die Eingabe bestimmter Parameter einen ersten Entwurf für eine neue Anlage zur Aufzucht von Pflanzen.

Bei einer zweiten bevorzugten Ausführungsform sucht die erfindungsgemäße Vorrichtung einen neuen geeigneten Standort für den Neubau einer Anlage zur Aufzucht von Pflanzen anhand von Nennung von Daten und Parametern über die neue Anlage.

Hierfür wird das folgende Verfahren umgesetzt:
Verfahren zum Planen und/oder Steuern und/oder Simulieren des Betriebs einer Anlage zur Aufzucht von Pflanzen, wobei die Anlage mindestens ein Regallager zur Aufzucht von Pflanzen in Pflanzbehältern und mindestens einen schienengebundener Transportroboter mit einer heb- und senkbar angetriebenen Ladeplattform und mindestens einem darauf angeordneten Längsförderer aufweist, welcher mindestens einen Pflanzbehälter in Regallagerplätze des Regallagers ein- oder auslagert, wobei mindestens eine Auswerteeinheit
- Daten von mindestens einer bestehenden Anlage zur Aufzucht von Pflanzen empfängt, verarbeitet und ein Anlagendatenmodell erstellt,
- Daten mit digitalen Informationen über mindestens einen Standortfaktor empfängt, auswertet und ein Standortfaktorenmodell erstellt,
und dass bei Nennung von Daten für eine neue Anlage zur Aufzucht von Pflanzen die Auswerteeinheit anhand der Daten aus dem Anlagedatenmodell und dem Standortfaktorenmodell einen neuen, geeigneten Standort für die Errichtung einer der neuen Anlage automatisch identifiziert und auswählt.

Zusätzlich kann die Auswerteeinheit eine Steuerung für der gesamten Anlage bereitstellen, welche Tools, wie z.B. ein Steuerungstool, ein Klimatool, ein Nährstofftool oder ein Lichttool aufweist. Bei der vorliegenden Ausführungsform ermittelt die Auswerteeinheit einen geeigneten Standort für eine neue Anlage zur Aufzucht von Pflanzen anhand von vorher genannten Daten und Parameter. Der neue, geeignete Standort muss zumindest die Minimalforderungen der neuen Anlage zur Aufzucht von Pflanzen erfüllen. Dies können beispielsweise Minimalanforderungen bezüglich der Größe des Bauplatzes, die erlaubte Höhe für das Gebäude, eine geeignete Zu- und Abfahrt oder dergleichen sein. Der geeignete Standort ist grafisch auf einer digitalen oder analogen Karte darstellbar. Alternativ können mehrere geeignete Standorte, sowie deren Vor- und Nachteile dargestellt werden. Da bei der neuen Anlage ebenfalls mindestens ein Transportroboter die Pflanzbehälter in Regallagerplätze des Regallagers ein- oder auslagert, greift die Auswerteeinheit auf das "Wissen" der bestehenden Anlagen zurück und erstellt eine Steuerung für die Transportroboter der neuen Anlage zur Aufzucht von Pflanzen.

Bei einer dritten bevorzugten Ausführungsform ermittelt die erfindungsgemäße Vorrichtung mit mindestens einer Auswerteeinheit vorab die Investitions- und Betriebskosten einer neuen Anlage zur Aufzucht von Pflanzen.

Neben dem erfindungsgemäßen Verfahren wird ferner ein Schutz für eine Vorrichtung zum Planen und Steuern des Betriebs einer Anlage zur Aufzucht von Pflanzen unter Verwendung eines Anlagendatenmodells, das digitale Informationen über mindestens eine bestehende Anlage zur Aufzucht von Pflanzen enthält und eines Standortfaktorenmodell, das digitale Informationen über mindestens einen Standortfaktor enthält, beansprucht.

Die Vorrichtung weist mindestens eine Auswerteeinheit auf, welche automatisch eine neue Anlage zur Aufzucht von Pflanzen relativ zu einem zu errichtenden und/oder bestehenden und/oder zu bearbeitenden Gebäude unter Verwendung von den digitalen Informationen aus dem Anlagendatenmodell und/oder den digitalen Informationen aus einem Standortfaktorenmodell erstellt. Hierfür identifiziert und liest die Auswerteeinheit automatisch die relevanten Informationen aus dem Anlagendatenmodell und die relevanten Informationen aus dem Standortfaktorenmodell aus. Die Auswerteeinheit weist zusätzlich mindestens eine Steuerungsvorrichtung zum Steuern mindestens eines Transportroboters auf, wobei die Auswerteeinheit die digitalen Informationen aus dem Anlagendatenmodell und die relevanten Informationen aus dem Standortfaktorenmodell ausliest und verarbeitet und an die Steuerung des Transportroboters an die neue Anlage anpasst.

Die oben genannten Ausführungsformen verstehen sich als und/oder Varianten. Entscheidend ist, dass bei allen Ausführungsform die Auswerteeinheit Daten von z.B. bestehenden Anlagen und/oder Parameter und/oder Standortfaktoren verarbeitet, wobei die Daten sowohl für eine Diagnose und Optimierung einer bestehenden Anlage, als auch für eine neu zu errichtender Anlage genutzt werden.

### Anlagendatenmodell

Die erfindungsgemäße Vorrichtung nutzt verschiedene Daten und Parameter aus bestehenden Anlagen, welche von der Auswerteeinheit verarbeitet werden, wobei daraus ein Anlagendatenmodell erstellt wird. In dem Anlagendatenmodell sind somit digitale Informationen über verschiedene Anlagenmodelle enthalten, auf welche bei der Planung einer neuen Anlage zurückgegriffen und/oder berücksichtigt werden können. Das Anlagendatenmodell kann beispielsweise eine Software, ein Softwaremodul oder eine Applikation sein, welche eine Schnittstelle zur Kommunikation mit der Auswerteeinheit aufweist.

Die Auswerteeinheit kann mittels des Anlagendatenmodells automatisch für die Planung und/oder Errichtung und/oder Umbau einer Anlage eine geeignete Anlage anhand digitaler Informationen aus dem Anlagendatenmodell auswählen, wobei hierfür ein automatisches Identifizieren und Auslesen von relevanten Informationen aus dem Anlagendatenmodell anhand von Kriterien erfolgt.

Um die Daten, Informationen und/oder Parameter aus den bestehenden Anlagen zu erhalten, werden der Auswerteeinheit Datensätze in Form von digitalen und/oder anlogen Informationen, Parameter, Informationen, Bauplänen usw. von den bestehenden Anlagen zur Verfügung gestellt und/oder Daten von mindestens einem Sensor.

Bei den Daten kann es sich beispielsweise auch um Datensätze handeln, welche die Erfahrung hinsichtlich des Wachstums der Pflanzen betreffen. Dies kann beispielsweise die Wachstumsgeschwindigkeit, die Anzahl der Pflanzen pro Pflanzbehälter, die aufwendete Nährstoffmenge usw. sein.

Des Weiteren werden auch Daten von Sensoren empfangen und verarbeitet. Ein solcher Sensor ist entweder fest oder lösbar an der jeweiligen Vorrichtung befestigt und kann beispielsweise eine physikalische oder chemisch messbare Größe erfassen. Die gewonnen Daten liegen vorzugsweise in Form von analogen und/oder digitalen Daten vor. Die Übertragung der gewonnen Daten erfolgt ausgehend von dem Sensor drahtlos oder drahtgebunden über eine Kommunikationsschnittstelle an die Auswerteeinheit.

### Anordnung des Sensors

a) An mindestens einem Pflanzbehälter ist mindestens ein Sensor angeordnet, mit welchem die folgenden Parameter des Pflanzbehälters erfassbar sind:
   Temperatur, relative oder absolute Position, Bewegung, Beschleunigung, Orientierung, Vibration, Luftfeuchtigkeit oder Blatttemperatur.
   Es ist hierbei nicht notwendig, dass an jedem Pflanzbehälter ein Sensor angeordnet ist. Beispielsweise kann es auch ausreichen, wenn pro Regalreihe/Regalspalte nur ein oder zwei Pflanzbehälter mit einem derartigen Sensor ausgestattet sind.
b) An dem Transportroboter ist mindestens ein Sensor angeordnet, welcher die Fahr- und Betriebsdaten erfasst. Der Sensor kann beispielsweise die Geschwindigkeit, die Wegstrecke, die Beschleunigung usw. erfassen. Zusätzlich kann der Sensor beispielsweise eine Unwucht oder unerwünschte Vibration feststellen. Dadurch können mögliche Schäden (z.B. Achse, Räder, Antrieb) frühzeitig erkannt werden und eine zeitnahe Reparatur in die Wege geleitet werden. Gleichzeitig kann abgeschätzt werden, wann der nächste Transportroboter möglicherweise ausfallen wird.
c) An dem Gebäude, in welchem sich die vertikale Landwirtschaft befindet, ist mindestens ein Sensor angeordnet. Der Sensor erfasst die Umgebungsbedingungen, wie z.B. Temperatur, Luftfeuchtigkeit, Lichteinstrahlung, Wind, usw.

### Standortfaktorenmodell

Die erfindungsgemäße Vorrichtung nutzt verschiedene Standortfaktoren, welche von der Auswerteeinheit verarbeitet werden und erstellt daraus ein Standortfaktorenmodell. In dem Standortfaktorenmodell sind somit digitale Informationen von verschiedenen Standortfaktoren enthalten, auf welche bei der Planung einer neuen Anlage zurückgegriffen und/oder berücksichtigt werden kann. Das Standortfaktorenmodell kann beispielsweise eine Software, ein Softwaremodul oder eine Applikation sein, welche eine Schnittstelle zur Kommunikation mit der Auswerteeinheit aufweist.

Unter Standortfaktoren versteht man die Gesamtheit aller Faktoren, die die Auswerteinheit bei der Wahl eines Standorts berücksichtigt. Insbesondere für die Planung einer neuen Anlage zur Aufzucht von Pflanzen sind die Umgebungs- bzw. Standortinformationen von Bedeutung. Die Daten bezieht die Auswerteeinheit entweder selbstständig (z.B. aus dem Internet) oder sie werden der Auswerteeinheit zur Verfügung gestellt.

Hierbei kann es sich beispielsweise um die folgenden Informationen bzw. Daten handeln:

### a) Strompreise

Die Höhe der (lokalen) Strompreise und welche alternativen Möglichkeiten gibt es um Strom zu beziehen bzw. selbst zu erzeugen (z.B. Photovoltaikanlage). Des Weiteren können die Strom- bzw. Energiemenge berücksichtigt werden.

### b) Personal

Personalkosten und Arbeitskräftepotenzial.

### c) Grundstück

Die Grundstückskosten, wie z.B. der Quadratmeterpreis eines Grundstücks und zusätzliche Nebenkosten, welche beim Erwerb eines Grundstücks entstehen, wie z.B. Notarkosten, Grunderwerbsteuer, Immobilienmakler müssen berücksichtigt werden.

### d) Bodenstruktur

Die Bodenstruktur kann durch eine Bodenanalyse untersucht werden. Dadurch kann die Auswerteeinheit besser abschätzen, ob zusätzliche Kosten durch z.B. eine Drainage, Entsorgung von Altlasten oder Pfahlgründung entstehen.

### e) Gebäude

Unter einem Gebäude wird ein Bauwerk verstanden, welches betreten werden kann und in welchem sich die Anlage zur Aufzucht von Pflanzen befindet. Vorzugsweise ist das Gebäude als Gewerbe- und Lagerhalle oder Produktionshalle ausgebildet.

Vorzugsweise ist das Gebäude als ein sogenannter Farmscraper ausgebildet.

Für das Planen, den Bau, den Betrieb, sowie die Überprüfung von Gebäuden und anderen Bauwerken werden vorzugsweise digitale Bauwerkdatenmodelle für alle am Bauwerk beteiligten Gewerke verwendet. Unter dem Begriff Bauwerkinformationsmodellierung (Building Information Modeling (kurz BIM)) wird eine Arbeitsmethode verstanden, wobei mithilfe von Software alle relevanten Informationen über das Bauwerk mit seinen Daten und Bezügen digital modelliert, kombiniert und erfasst werden. Bei den BIM-Modellen handelt es sich um computerlesbare Dateien, welche zahlreiche Informationen und Charakteristika bzgl. des zu errichtenden bzw. zu bearbeitenden Gebäude enthalten. Derartigen Bauwerkdaten-Modellen können beispielsweise zur Visualisierung des Gebäudes und/oder bestimmter Gebäudeteile genutzt werden. Zusätzlich können die Daten weitere Informationen enthalten, wie z.B. Standortfaktoren, wie Energie- und Wasserversorgung oder Infrastruktur, aber auch Informationen bzgl. des Gebäudes, wie z.B. Abmessungen des Gebäudes (Größe, Volumen, Höhe, Materialvolumen, Gewicht usw.). Des Weiteren lässt sich ein Zeitplan für die Errichtung des Gebäudes aus dem Datenmodell ableiten. Ein derartiges Bauwerkdatenmodell und dessen Dateien lassen sich über eine Kommunikationsschnittstelle versenden und empfangen und stehen dadurch verschiedenen Beteiligten zur Verfügung.

### f) Lage / Umfeld

Das Gebäude für die Anlage zur Aufzucht von Pflanzen sollte vorzugsweise in der Nähe eine Stadt gebaut werden. Hierfür sollte berücksichtig werden, ob gegenüber dem direkten Umfeld bzw. der Nachbarschaft besondere Lärmschutz- und Emissionsbestimmungen gibt.

Des Weiteren müssen Daten bezüglich der Größe des Einzugsgebiets und hinsichtlich der Anzahl der Zielkunden erhoben werden. Ferner ist die Kaufkraft in der jeweiligen Region von Interesse.

### g) Verkehrsanbindung/Infrastruktur

Die Transportwege müssen berücksichtigt werden. Beispielsweise wie ist die Verkehrsanbindung an das öffentliche Straßennetz. Wie lange benötigt eine LKW bis zur nächsten Autobahn, usw. Des Weiteren muss das Anschluss an das öffentliche Netzt für die Gas-/Strom- und Wasserversorgung und Internetverbindung berücksichtigt werden.

### h) Niederschlag

Die durchschnittliche Niederschlagsmenge an dem jeweiligen Standort ist von Interesse. Das Regenwasser kann beispielsweise in einer Zisterne aufgefangen werden und ggf. für die Aufzucht der Pflanzen genutzt werden. Zusätzlich oder alternativ kann beispielsweise Grundwasser oder Wasser aus einem nahelegenden See oder Meer genutzt werden. Sollte Meerwasser genutzt werden, so entsteht ein zusätzlicher Aufwand und damit verbundene zusätzliche Kosten für eine Meerwasserentsalzung.

### i) Licht

Die Pflanzen benötigen bei der Aufzucht Licht. Das Umgebungslicht und die Anzahl der Sonnenstunden an dem jeweiligen Standort sind daher von Bedeutung. Das Licht kann entweder über Fenster oder über Lichtleitvorrichtungen direkt zu den Pflanzen geleitet werden. Des Weiteren ist es möglich, dass eine Photovoltaik-Anlage den Strom für eine künstliche Belichtung erzeugt. Die Sonnenenergie kann ferner für eine Solarthermie genutzt werden.

### j) Klima

Ein weiterer wichtiger Faktor bei der Aufzucht von Pflanzen ist das Klima. Teilweise muss an warmen bzw. heißen Standorten die Anlage zur Aufzucht von Pflanzen gekühlt und teilweise an kühlen bzw. kalten Standorten die Anlage zur Aufzucht von Pflanzen geheizt werden. Die korrekte Klimatisierung benötigt Energie, welche von der Auswerteeinheit berücksichtigt wird.

### k) Wetterdaten

Mit von gezielten Analysen des Wetters und Vorhersagen lässt sich vorausschauend die Anlage zur Aufzucht von Pflanzen steuern.

### I) Steuern/Subventionen

Daten hinsichtlich der Gewerbesteuer. Des Weiteren ist von Interessen, ob es eine (kommunale) Förderung gibt.

### Auswerteeinheit

Die Auswerteeinheit ist vorzugsweise als ein Computer, eine Rechenanlage oder (elektronische) Datenverarbeitungsanlage ausgebildet.

Die Auswerteeinheit empfängt die (Roh-) Daten, welche aufbereitet und als verarbeitete (abgeleitete) Daten bereitgestellt werden. Vorzugsweise weist die Auswerteeinheit mindestens einen Speicher zum Speichern der (Roh-) Daten und/oder verarbeiteten Daten auf. Die Daten können entweder von der Auswerteeinheit weiterverarbeitet werden oder es erfolgt ein Zugriff durch eine externe Auswerteeinheit. Die Speicherung der Daten erfolgt entweder lokal oder in einer Cloud. Die Verarbeitung der Daten erfolgt beispielsweise mit künstlicher Intelligenz (KI).

Die Auswerteeinheit weist mindestens eine Software und/oder ein Software-Tool auf. Unter einem Tool wird ein Dienstprogramm verstanden, welches systemnahe Aufgaben bearbeitet. Die Auswerteeinheit kann beispielsweise die folgenden Tools aufweisen:
- Positionsbestimmungstool
   Das vorliegende Tool wird zur Bestimmung eines neuen Standorts für eine neue Anlage eingesetzt.
- Vergleichstool
   Mit dem Vergleichstool werden verschiedene Anlagen und Standortfaktoren verglichen.
- Identifizierungstool
   Mit dem vorliegenden Tool werden automatisch die relevanten Informationen aus dem Anlagendatenmodell und dem Standortfaktorenmodell identifiziert. Die können Informationen bezüglich der Anlage, wie dem Regallager, den Regallagerplätzen, den Transportroboter oder auch Informationen bezüglich des Standorts, wie Klimadaten, Infrastruktur, usw.
- Auswahltool

Das Auswahltool bestimmt entweder eine neue Anlage und/oder einen neuen Standort.

Auf Basis der Daten kann die Auswerteeinheit entscheiden, ob der Standort für eine neue Anlage zur Aufzucht von Pflanzen geeignet ist oder nicht. Alternativ kann die Auswerteeinheit einen anderen Standort vorschlagen. Die Auswahl des Standorts ist hierbei nicht lokal begrenzt - es können beispielsweise verschiedene Standorte verglichen werden, welche sich in anderen Ortschaften, Städten, Bundesländern, Ländern oder Kontinenten befinden. Es ist ferner möglich, dass die Auswerteeinheit anhand einer Reihung verschiedene Anlagen an verschiedene Standorte gegenüberstellt.

Die Auswerteeinheit kann einen ersten Entwurf bzw. ein Layout für eine neue Anlage erstellen oder eine Optimierung der bestehenden Anlage vorschlagen. Der Entwurf kann beispielsweise grafisch mit einem (Bau-)Plan dargestellt werden. Die Auswerteeinheit kann hierfür verarbeitete Daten an einen Drucker oder Plotter senden, welcher einen Plan ausdruckt. Des Weiteren ist es möglich, dass die Daten an einen 3D-Drucker gesendet werden, welcher ein 3D-Modell von der Anlage erstellt.

Der Entwurf beinhaltet beispielsweise bereits die Abmessung des Gebäudes/Halle, die Grundflächen, die An- und Abfahrtswege, die Licht-Wasser- und Klimatisierungsvorrichtungen, die Regale (Anzahl, Höhe, Regalfächer), die Anzahl der Transportroboter, die Analyse- und Erntestation, die Verpackungsstation, usw.

Die Auswerteeinheit kann ferner auch eine bestehende Anlage optimieren. Beispielsweise kann die Auswerteeinheit die bestehende Anlage simulieren und anhand der gewonnen Daten Schwachstellen, sowie Lösungsmöglichkeiten darstellen.

### - Konfigurationstool

Die Auswerteeinheit weist vorzugsweise einen Konfigurator auf, mit welchem eine komplette Anlage zur Aufzucht von Pflanzen konfiguriert werden kann. Mit dem Konfigurator lässt sich beispielsweise die Halle bzw. das Gebäude mit sämtlichen Zusatzoptionen, wie z.B. Dach- und Wandverkleidung, Farben, Fenster, Türen, Tore, Beleuchtung, Klimatisierung, usw.) planen und visuell darstellen. Auf Basis der Daten hinsichtlich der gewünschten Abmessung des Gebäudes und der Schnee- und Windlasten erstellt der Konfigurator einen ersten 3D-Entwurf. Im Anschluss daran kann mit dem Konfigurator die Ausstattung (Regale, Schienen für Transportroboter, Anschlüsse, Energieversorgung, Photovoltaik) konfiguriert und visuell dargestellt werden. Parallel dazu erstellt die Auswerteeinheit bereits eine Stückliste, welche für den folgenden Bestellvorgang bzw. für das Bauprojekt genutzt wird.

### - Simulationstool

Mit dem Simulationstool ist eine Generierung einer virtuellen Darstellung des zu errichtenden Gebäudes und/oder der Anlage zur Aufzucht von Pflanzen auf einer Anzeigevorrichtung unter Zuhilfenahme der digitalen Informationen aus dem Anlagendatenmodell und dem Standortfaktorenmodell vorgesehen.

Das Simulationstool dient zur realitätsnahen Simulation des Anlagenbetriebs. Dies bedeutet, dass die Auswerteeinheit anhand von bestimmten Parametern eine Anlage planen und eine Simulation durchführen kann. Des Weiteren lassen sich anhand der Simulation die Betriebskosten, wie z.B. Klimatisierung, Energieverbrauch, Miet- und Leasingkosten, Wasser, Entsorgung (Abwasser, Müll, Bio) usw. darstellen. Zusätzlich kann die Auswerteeinheit die Investitionskosten berechnen und Daten für die strategischen Unternehmensplanung bereitstellen.

Des Weiteren lässt sich mit der Auswerteinheit die Bewegungen der Pflanzbehälter innerhalb des Regallagers mit den Transportroboter simulieren. Dies können beispielsweise die Entnahme Pflanzbehälters aus einem ersten Regallagerfach, die Kontrolle der Pflanzen in dem Pflanzbehälter, das Aussortieren von möglichen schadhaften Pflanzen, das Separieren von zu großen Pflanzen, sowie die Ernte der Pflanzen sein.

### Schnittstelle

Die Auswerteeinheit weist vorzugsweise mindestens eine Kommunikationsschnittstelle auf, über welche die Daten empfangen und die verarbeiteten Daten wieder übertragen werden. Die Datenkommunikation kann mit (Roh-) Daten und/oder verarbeiteten Daten bidirektional oder unidirektional über die Kommunikationsschnittstelle erfolgen. Die Abfrage und Erfassung der Daten erfolgt von der Auswerteeinheit entweder ständig oder zu bestimmten Zeitpunkten.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schienengebundener Transportroboter gemäß dem Stand der Technik
- Figur 2:: Regallager mit einem schienengebundenen Transportroboter gemäß dem Stand der Technik
- Figur 3:: schematische Darstellung des Regallagerplatzes mit Deckel mit einem ausgezogenen Pflanzbehälter
- Figur 4:: schematische Diagrammdarstellung der Auswerteeinheit und deren Funktionen

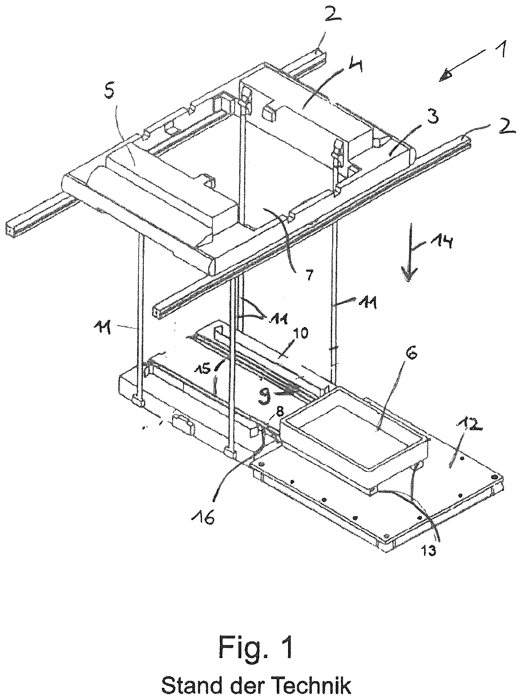

Mit der Figur 1 wird ein Transportroboter 1 gemäß dem Stand der Technik gezeigt, wie er in einem Regallager 17 zur Aufzucht von Pflanzen eingesetzt werden kann. Bei dem Transportroboter 1 handelt es sich um einen Transportroboter, wie er mit der DE 10 2017 121 638 A1 offenbart wird, auf welche vollumfänglich Bezug genommen wird.

Der Transportroboter 1 ist in Längsrichtung verfahrbar angetrieben und befindet sich auf einer Schienenbahn 2, die aus zwei zueinander beabstandeten und parallel verlaufenden Profilschienen besteht. Die Antriebsräder sind nicht dargestellt. Der Transportroboter 1 weist ein Gehäuse 3 auf, welches in seinem Mittenbereich eine Ausnehmung 7 aufweist, in der mit Bewegungsspiel eine heb- und senkbar ausgebildete Ladeplattform 10 angeordnet ist.

Es sind zwei einander gegenüberliegende Hubantriebskästen 4, 5 vorgesehen. In jedem Hubantriebskasten 4, 5 ist ein Hubmotor angeordnet, der über einen Antriebsriemen eine Antriebswelle antreibt, die drehfest mit zwei gegenüberliegend angeordneten Wickeltrommeln verbunden ist. Jeweils ein Hubband 11 ist über jede Wickeltrommel gewickelt.

Bei einem synchronen Antrieb der Hubmotoren wird die Ladeplattform 10 gemäß Fig. 1 in vertikaler Richtung in Pfeilrichtung 14 abgesenkt und kann in Gegenüberstellung zu einem Regellagerplatz 12 gebracht werden, der eine horizontale (oder schräg geneigte) Ablageebene ausbildet.

Auf der Ablageebene des Regallagerplatzes 12 sind zwei zueinander parallele Ablagepaneele 13 angeordnet, in deren Hohlprofil die beiden Förderbänder 8, 9 des Längsförderers 15 hineinfahren. Der Längsförderer 15 ist bevorzugt ein Teleskopschlitten 16, der mit teleskopartig ausfahrbaren förderbandartigen Ladegabeln in der Lage ist, in seitlicher horizontaler Richtung über den Außenumriss der Ladeplattform 10 hinaus fahren zu können, um ein neben der Ladeplattform 10 auf einem Regallagerplatz 12 gelagerten Pflanzbehälter 6 zu unterfahren und aufzunehmen. Dabei sind die teleskopartig ausfahrbaren Ladegabeln als angetriebene Förderbänder 8, 9 ausgebildet, die auf einem Teleskopschlitten 16 angeordnet sind, welche bei ausgefahrenen Teleskopschlitten 16 in der Lage sind, das Ladegut (Pflanzbehälter 6) bodenseitig zu unterfahren und sich an die Bodenseite des Pflanzbehälters 6 anzulegen.

Gemäß der Figur 1 findet eine seitliche Abladung oder Aufladung eines Pflanzbehälters 6 in einem Regallagerplatz 12 statt. Es ist erkennbar, dass die Ladeplattform 10 auf die Ablageebene des Regallagerplatzes 12 abgesenkt ist und die Förderbänder 8, 9, die in einem verschiebbar angetriebenen Längsförderer angeordnet sind, in die auf dem Regallagerplatz 12 angeordneten Ablagepaneele 13 hinein fahrbar sind, wobei die beiden Förderbänder 8, 9 den Pflanzbehälter 6 bodenseitig untergreifen.

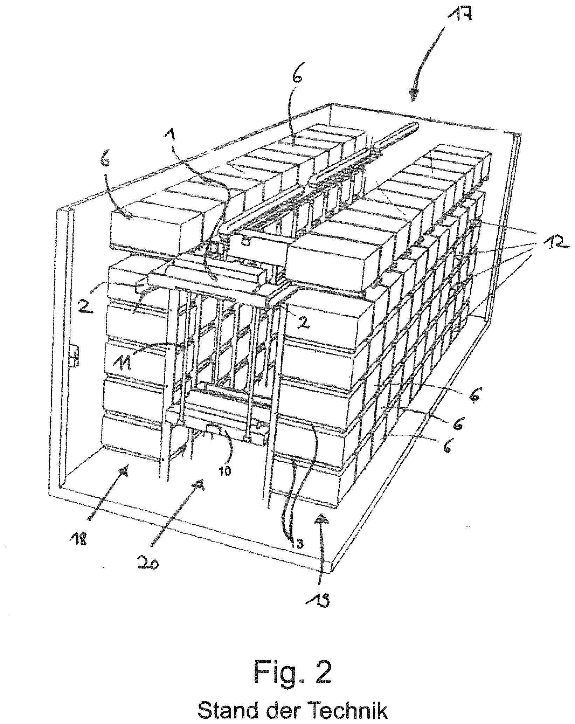

Mit der Figur 2 wird ein Regallager 17 gemäß dem Stand der Technik gezeigt. Das Regallager 17 besteht aus einer ersten Regalreihe 18 und einer zweite Regalreihe 19. Die beiden Regalreihen 18, 19 sind beabstandet voneinander angeordnet, wobei sich dazwischen eine Regalgasse 20 erstreckt. In der Regalgasse 20 ist deckenseitig ein Transportroboter 1 angeordnet, welcher auf einer Schienenbahn 2 fährt, wobei eine erste Schiene der ersten Regalreihe 18 und eine zweite Schiene der zweiten Regalreihe 19 zugeordnet ist. Die Regalreihen 18 und 19 weisen sechs Regalplätze 12 in vertikaler Richtung und elf Regallagerplätze 12 in horizontaler Richtung auf. Alle Regallagerplätze 12 sind gleich groß ausgebildet.

Die Regallagerplätze 12 werden durch Ablagepaneele 13 gebildet, auf welchen die Pflanzbehälter 6 aufliegen, so dass jeder Pflanzbehälter 6 von dem darüber und daneben angeordneten Pflanzbehälter 6 beabstandet ist. Auf diese Weise ergibt sich die Möglichkeit, dass der Transportroboters 2 in der Regalgasse 20 jeden beliebigen Pflanzbehälter 6 in jeder beliebigen Regalreihe 18, 19 und Regalspalte seitlich untergreifen und auf seine Ladeplattform 10 aufladen kann.

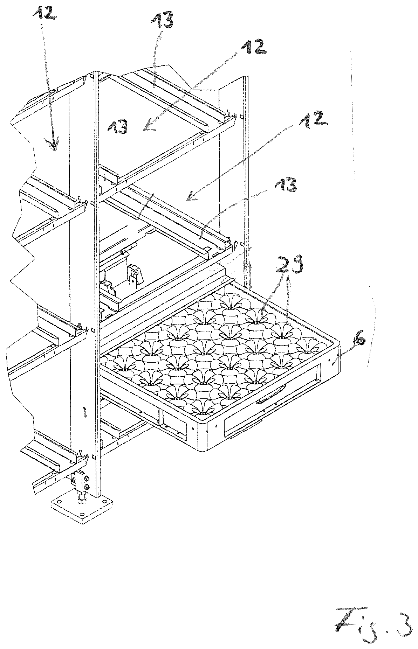

Figur 3 zeigt einen Ausschnitt des Regallagers 12, wobei sich ein Pflanzbehälter 6 teilweise in einem Regallagerplatz 12 befindet. In dem Pflanzbehälter 6 befinden sich mehrere Pflanzen 29.

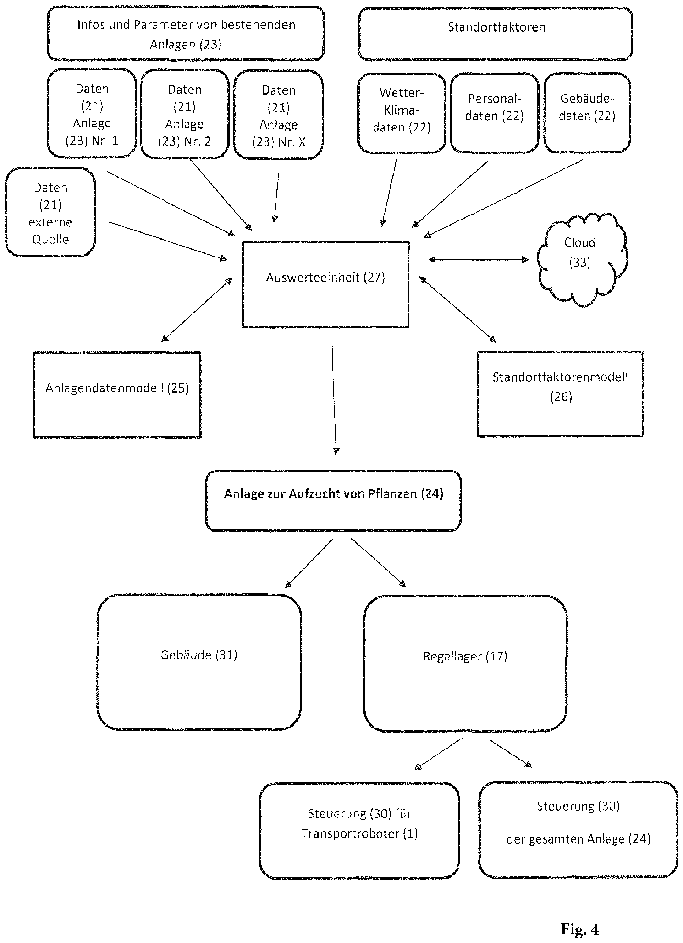

Mit der Figur 4 wird schematisch die zentrale Auswerteeinheit 27 gezeigt. Die Auswerteeinheit 27 empfängt die Daten 21, Informationen und Parameter von bestehenden Anlagen 23 (z.B. Anlage Nr.1, Anlage Nr.2 und Anlage Nr. X), verarbeitete diese und legt sie in dem Anlagendatenmodell 25 ab.

Ferner empfängt die Auswerteinheit 27 Daten 21, Informationen und Parameter von externen Quellen. Hierbei handelt es sich um Wissen und Erfahrungen bzgl. der Pflanzen und dem Wachstum der Pflanzen.

Des Weiteren empfängt die Auswerteeinheit 27 Standortfaktoren (22), wie z.B. Wetter- und Klimadaten, Personaldaten und/oder Gebäudedaten, verarbeitete diese und legt sie in dem Standortfaktorenmodell 26 ab.

Die Auswerteeinheit 27 kann verschiedene Tools für verschiedene Aufgabenstellungen aufweisen. Dies können beispielsweise ein Positionsbestimmungstool, Vergleichstool, Identifizierungstool, Auswahltool, Konfigurationstool oder Simulationstool sein.

Die Auswerteeinheit 27 weist mindestens eine Kommunikationsschnittstelle für einen Datenaustausch mit einer Cloud 33 auf. Ferner ist es möglich, dass bestimmte Software-Tools von einer externen Auswerteeinheit durchgeführt werden.

Mit dem Anlagendatenmodell 25 und dem Standortfaktorenmodell 26 plant und/oder steuert und/oder simuliert die Auswerteeinheit den Betrieb einer (neuen) Anlage 24 zur Aufzucht von Pflanzen (29). Dies kann die Planung und/oder die Steuerung und/oder die Simulation eines Gebäudes für die Anlage zur Aufzucht von Pflanzen 29 als auch die Planung und/oder die Steuerung und/oder die Simulation mindestens eines Regallagers 17 sein.

Des Weiteren kann die Auswerteeinheit eine Steuerung 30 zum Steuern mindestens eines Transportroboters 1 und/oder eine Steuerung 30 zum Steuern der gesamten Anlage 24 aufweisen. Die Steuerung 30 der gesamten Anlagen 24 umfasst dann beispielsweise ein Steuerungstool zur Steuerung der Fördertechnik, ein Klimatool zur Steuerung der klimatischen Bedingungen innerhalb der Anlage 23, 24, ein Nährstofftool zur Steuerung der Nährstoffversorgung der Pflanzen 29, ein Lichttool zur Steuerung der Beleuchtung für die Pflanzen 29 und/oder einem Bewässerungstool zur Steuerung der Bewässerung.

### Zeichnungslegende

- 1.: Transportroboter
- 2.: Schienenbahn
- 3.: Gehäuse
- 4.: Hubantriebskasten
- 5.: Hubantriebskasten
- 6.: Pflanzbehälter
- 7.: Ausnehmung (von 2)
- 8.: Förderband
- 9.: Förderband
- 10.: Ladeplattform
- 11.: Hubband
- 12.: Regallagerplatz
- 13.: Ablagepanelle
- 14.: Pfeilrichtung
- 15.: Längsförderer
- 16.: Teleskopschlitten
- 17.: Regallager
- 18.: Regalreihe (links)
- 19.: Regalreihe (rechts)
- 20.: Regalgasse (Mitte)
- 21.: Gebäude
- 22.: Daten über Standortfaktoren
- 23.: Anlage zur Aufzucht von Pflanzen (bestehend)
- 24.: Anlage zur Aufzucht von Pflanzen (neu)
- 25.: Anlagendatenmodell
- 26.: Standortfaktorenmodell
- 27.: Auswerteeinheit
- 28.: Standort (neu)
- 29.: Pflanzen
- 30.: Steuerung
- 31.: Gebäude

## Patentansprüche

1. Verfahren zum Planen und/oder Steuern und/oder Simulieren des Betriebs einer Anlage (23, 24) zur Aufzucht von Pflanzen (29), wobei die Anlage (23, 24) mindestens ein Regallager (17) zur Aufzucht von Pflanzen (29) in Pflanzbehältern (12) und mindestens einen schienengebundenen Transportroboter (1) mit einer heb- und senkbar angetriebenen Ladeplattform (10) und mindestens einem darauf angeordneten Längsförderer (15) aufweist, welcher mindestens einen Pflanzbehälter (6) in Regallagerplätze (12) des Regallagers (17) ein- oder auslagert, **dadurch gekennzeichnet, dass** mindestens eine Auswerteeinheit (27)
- Daten (21) von mindestens einer bestehenden Anlage (23) zur Aufzucht von Pflanzen (29) empfängt, verarbeitet und ein Anlagendatenmodell (25) erstellt,
- Daten (22) von mindestens einem Standort mit den dazugehörigen digitalen Informationen über die Standortfaktoren empfängt, auswertet und ein Standortfaktorenmodell (26) erstellt,
und dass bei Nennung eines neuen Standorts (28) die Auswerteeinheit (27) automatisch anhand der Daten (21, 22) aus dem Anlagedatenmodell (25) und dem Standortfaktorenmodell (26) eine neue Anlage (24) zur Aufzucht von Pflanzen (29) plant und zumindest eine Steuerung (30) für den Transportroboter (1) für die neue Anlage (24) bereitstellt.

2. Verfahren zum Planen und/oder Steuern und/oder Simulieren des Betriebs einer Anlage (23, 24) zur Aufzucht von Pflanzen (29), wobei die Anlage (23, 24) mindestens ein Regallager (17) zur Aufzucht von Pflanzen (25) in Pflanzbehältern (12) und mindestens einen schienengebundenen Transportroboter (1) mit einer heb- und senkbar angetriebenen Ladeplattform (10) und mindestens einem darauf angeordneten Längsförderer (15) aufweist, welcher mindestens einen Pflanzbehälter (6) in Regallagerplätze (12) des Regallagers (17) ein- oder auslagert, **dadurch gekennzeichnet, dass** mindestens eine Auswerteeinheit (27)
- Daten (21) von mindestens einer bestehenden Anlage (23) zur Aufzucht von Pflanzen (29) empfängt, verarbeitet und ein Anlagendatenmodell (25) erstellt,
- Daten (22) mit digitalen Informationen über mindestens einen Standortfaktor empfängt, auswertet und ein Standortfaktorenmodell (26) erstellt,
und dass bei Nennung von Daten für eine neue Anlage (24) zur Aufzucht von Pflanzen (29) die Auswerteeinheit (27) anhand der Daten (21, 22) aus dem Anlagedatenmodell (25) und dem Standortfaktorenmodell (26) einen neuen, geeigneten Standort (28) für die Errichtung einer der neuen Anlage (24) automatisch identifiziert und/oder auswählt und zumindest eine Steuerung (30) für den Transportroboter (1) bereitstellt.

3. Verfahren zum Simulieren des Betriebs einer Anlage (23, 24) zur Aufzucht von Pflanzen (29), wobei die Anlage (23, 24) mindestens ein Regallager (17) zur Aufzucht von Pflanzen (29) in Pflanzbehältern (12) und mindestens einen schienengebundenen Transportroboter (1) mit einer heb- und senkbar angetriebenen Ladeplattform (10) und mindestens einem darauf angeordneten Längsförderer (15) aufweist, welcher mindestens einen Pflanzbehälter (6) in Regallagerplätze (12) des Regallagers (17) ein- oder auslagert, **dadurch gekennzeichnet, dass** mindestens eine Auswerteeinheit (27)
- Daten (21) mit digitalen Informationen von mindestens einer bestehenden Anlage (23) zur Aufzucht von Pflanzen (29) empfängt, verarbeitet und ein Anlagendatenmodell (25) erstellt,
- Daten (22) mit digitalen Informationen über mindestens einen Standortfaktor empfängt, auswertet und ein Standortfaktorenmodell (26) erstellt,
- Bereitstellen von digitalen Daten aus dem Anlagendatenmodell (25) und aus dem Standortfaktorenmodell (26) an einen Simulator zum Simulieren des Betriebs der Anlage (23, 24) auf Basis der bereitgestellten Informationen,
- Generieren einer virtuellen Darstellung der zu errichtenden und/oder bearbeitenden Anlage (23, 24) auf einer Anzeigevorrichtung des Simulators unter Zuhilfenahme der bereitgestellten digitalen Informationen aus dem Anlagendatenmodell (25) und aus dem Standortfaktorenmodell (26).

4. Verfahren nach einem der Ansprüche 1 bis 3, **dadurch gekennzeichnet, dass** die Auswerteeinheit (27) eine Steuerung (30) für der gesamten Anlage aufweist.

5. Verfahren nach einem der Ansprüche 1 bis 4, **dadurch gekennzeichnet, dass** die Auswerteeinheit (27) eine Steuerung (30) mit einem Steuerungstool zur Steuerung der Fördertechnik, einem Klimatool zur Steuerung der klimatischen Bedingungen innerhalb der Anlage (23, 24), einem Nährstofftool zur Steuerung der Nährstoffversorgung der Pflanzen (29), einem Lichttool zur Steuerung der Beleuchtung für die Pflanzen (29) und/oder einem Bewässerungstool zur Steuerung der Bewässerung aufweist.

6. Verfahren nach einem der Ansprüche 1 bis 5, **dadurch gekennzeichnet, dass** die Auswerteeinheit (27) mindestens ein Bestelltool aufweist, mit welchem eine Stückliste erstellt wird und ein automatischer Bestellvorgang mindestens eines Bauteils für die neue Anlage (24) zur Aufzucht von Pflanzen erfolgt.

7. Verfahren nach einem der Ansprüche 1 bis 6, **dadurch gekennzeichnet, dass** die Auswerteeinheit (27) vorab die Investitions- und Betriebskosten einer neuen Anlage (24) zur Aufzucht von Pflanzen ermittelt und zumindest grafisch darstellt.

8. Verfahren nach einem der Ansprüche 1 bis 7, **dadurch gekennzeichnet, dass** das Anlagendatenmodell (25) digitale Informationen über Anzahl an Pflanzbehältern (6), und/oder Anzahl an Pflanzen (29) und/oder Wachstum der Pflanzen (29) und/oder aufgewendete Energie und/oder aufgewendete Wasser- und Düngermenge und/oder Sensordaten von Transportrobotern (1) und/oder Sensordaten von Pflanzbehälter (6) und/oder Sensordaten vom Gebäude (31) aufweist.

9. Verfahren nach einem der Ansprüche 1 bis 8, **dadurch gekennzeichnet, dass** das Standortfaktorenmodell (26) digitale Informationen über Strompreise und/oder Personal und/oder Grundstückskosten und/oder Bodenstruktur und/oder Gebäude (31) und/oder Lage und/oder Umfeld und/oder Verkehrsanbindung und/oder Niederschlagsmenge und/oder Sonnenstunden und/oder Klimadaten und Subventionen aufweist.

10. Vorrichtung zum Planen und Steuern des Betriebs einer Anlage (23, 24) zur Aufzucht von Pflanzen (29) in mindestens einem Gebäude (31), wobei die Anlage (23, 24) mindestens ein Regallager (17) zur Aufzucht von Pflanzen (25) in Pflanzbehältern (12) und mindestens einen schienengebundenen, mit einer Steuerung (32) steuerbaren Transportroboter (1) mit einer heb- und senkbar angetriebenen Ladeplattform (10) und mindestens einem darauf angeordneten Längsförderer (15) aufweist, wobei mindestens einen Pflanzbehälter (6) in Regallagerplätze (12) des Regallagers (17) ein- oder auslagert,
**dadurch gekennzeichnet, dass**
mindestens eine Auswerteeinheit (27) Daten (21) mit digitalen Informationen von mindestens einer bestehenden Anlage (23) zur Aufzucht von Pflanzen (29) empfängt, verarbeitet und ein Anlagendatenmodell (25) erstellt,
die Auswerteeinheit Daten (22) mit digitalen Informationen über mindestens einen Standortfaktor empfängt, verarbeitet und ein Standortfaktorenmodell (26) erstellt,
die Auswerteeinheit (27) automatisch eine neue Anlage (24) zur Aufzucht von Pflanzen (29) relativ zu einem zu errichtenden und/oder bestehenden und/oder zu bearbeitenden Gebäude (31) unter Verwendung von den digitalen Informationen aus dem Anlagendatenmodell (25) und/oder den digitalen Informationen aus einem Standortfaktorenmodell (26) plant,
und dass die Auswerteeinheit (27) mindestens eine Steuerung (30) für den mindestens einen Transportroboter aufweist, wobei die Auswerteeinheit (27) automatisch die digitalen Informationen aus dem Anlagendatenmodell (25) und die relevanten Informationen aus dem Standortfaktorenmodell (26) ausliest und verarbeitet und automatisch eine Steuerung (30) des Transportroboters an die neue Anlage (24) anpasst.

11. Vorrichtung nach Anspruch 10, **dadurch gekennzeichnet, dass** das Anlagendatenmodell (25) digitale Informationen über Anzahl an Pflanzbehältern (6), und/oder Anzahl an Pflanzen (29) und/oder Wachstum der Pflanzen (29) und/oder aufgewendete Energie und/oder aufgewendete Wasser- und Düngermenge und/oder Sensordaten von Transportrobotern (1) und/oder Sensordaten von Pflanzbehälter (6) und/oder Sensordaten vom Gebäude (31) aufweist.

12. Vorrichtung nach Anspruch 10 oder 11, **dadurch gekennzeichnet, dass** das Standortfaktorenmodell (26) digitale Informationen über Strompreise und/oder Personal und/oder Grundstückskosten und/oder Bodenstruktur und/oder Gebäude (31) und/oder Lage und/oder Umfeld und/oder Verkehrsanbindung und/oder Niederschlagsmenge und/oder Sonnenstunden und/oder Klimadaten und Subventionen aufweist.

13. Vorrichtung nach einem der Ansprüche 10 bis 12, **dadurch gekennzeichnet, dass** die Auswerteeinheit (27) mindestens ein Positionsbestimmungstool und/oder Vergleichstool und/oder Identifizierungstool und/oder Auswahltool und/oder Konfigurationstool und/oder Simulationstool und/oder eine Steuerung (30) und/oder ein Klimatool und/oder ein Nährstofftool und/oder ein Lichttool aufweist.

14. Verfahren nach einem der Ansprüche 1 bis 9 und Vorrichtung nach einem der Ansprüche 10 bis 13, **dadurch gekennzeichnet, dass** der Transportroboter (1) in dem Regallager (17) deckenseitig fahrbar angeordnet ist oder als Regalbediengerät ausgebildet ist.
